# EUROPEAN PATENT APPLICATION

(11) **EP 1 153 762 A1**
(43) Date of publication of application: **14.11.2001**
(21) Application number: 00969890.3
(22) Date of filing: 19.10.2000
(51) Int. Cl.: B41M 5/26, G11B 7/24, G11B 7/26

(54) **OPTICAL RECORDING MEDIUM AND APPARATUS FOR MANUFACTURE THEREOF**

(30) Priority: 19.10.1999 JP 29678099
(71) Applicant: EBARA CORPORATION, Ohta-ku, Tokyo 144-8510 (JP)
(72) Inventor: OGURE, Naoaki, Ebara Corporation, Tokyo 144-8510 (JP)
(74) Representative: Wagner, Karl H., Dipl.-Ing.
(86) International application number: JP0007270
(87) International publication number: WO0128779

(57) **Abstract**

The present invention relates to an optical recording medium for writing information and reading written information based on a change that is caused in the optical property of an information recording layer by the application of a laser beam, etc., and an apparatus for manufacturing such an optical recording medium. The optical recording medium is characterized by an information recording layer comprising an ultrafine silver particle thin film which is formed by bringing an upper surface of a substrate into contact with an ultrafine silver particle solution or an ultrafine silver particle paste containing ultrafine silver particles, and thereafter drying and baking the ultrafine silver particle solution or the ultrafine silver particle paste.

## Description

### Technical Field

The present invention relates to an optical recording medium and an apparatus for manufacturing such an optical recording medium, and more particularly to an optical recording medium for writing information and reading written information based on a change that is caused in the optical property of an information recording layer by the irradiation with a laser beam, etc., and an apparatus for manufacturing such an optical recording medium.

### Background Art

The information recording layer of an optical recording medium of the type described above is generally made of an organic compound or a metal film. There has been developed an optical recording medium having an information recording layer whose metal film is formed of palladium (Pd). The developed optical recording medium provides a large change in reflectance and can be manufactured inexpensively.

Specifically, an information recording layer containing ultrafine particles of palladium having diameters ranging from 5 to 50 nm is formed on the surface of a substrate of quartz or the like, for example. When the information recording layer is irradiated with a laser beam or the like in the atmosphere, the local temperature of palladium (information recording layer) is increased to a value of 300°C or more and less than 700°C. At this time, palladium is oxidized into palladium oxide (PbO). Information can be written in and read from the information recording layer based on the conversion of palladium into palladium oxide.

Generally, however, palladium can be oxidized into palladium oxide when palladium in a metal state is heated until it becomes dark red in color. It is considered that palladium is oxidized only when its temperature reaches a high temperature in the above range from 300°C to 700°C, or a temperature close to 700°C.

Metal palladium has such a property that it excessively absorbs many kinds of gases, particularly hydrogen, even at an ambient temperature. It is known that the maximum amount of absorbed hydrogen is 350 to 850 times the volume of palladium itself, greatly increasing the apparent volume of palladium and making palladium brittle. When the absorbed hydrogen is discharged in vacuum environment, the discharged hydrogen becomes highly active. In other words, hydrogen brought into contact with palladium has a distinctive reduction action even at room temperature.

For the above reasons, if the information recording layer of an optical recording medium is made of palladium, then the optical recording medium suffers problems in that ① a device including information recording layer tends to be deteriorated and damaged upon exposure to a high-temperature atmosphere, ② the information recording layer generates high internal stresses and strains due to the absorbed hydrogen, and ③ the active hydrogen that is evolved from the palladium is liable to adversely affect surrounding materials, etc.

### Disclosure of Invention

The present invention has been made in view of the above drawbacks. It is an object of the present invention to provide an optical recording medium which is capable of writing and reading information based on a large change in reflectance without suffering a local temperature increase.

According to an invention described in claim 1, there is provided an optical recording medium characterized in that an information recording layer comprising an ultrafine silver particle thin film is formed by bringing an upper surface of a substrate into contact with an ultrafine silver particle solution or an ultrafine silver particle paste containing ultrafine silver particles, and thereafter drying and baking the ultrafine silver particle solution or the ultrafine silver particle paste.

Generally, it is known that silver provides a very active surface and is easily discolored by reacting with a corrosive medium (H₂S, SO₂ gas, or the like), and the discoloration is greatly accelerated upon irradiation with light. For example, if silver is irradiated with ultraviolet rays having a wavelength of 2537 Å, then the color of its surfaces changes to brown or black in 24 h even at an ambient temperature. By selecting appropriate conditions of the corrosive medium and the irradiation with light, required areas are discolored to write information without causing high local temperature rises. The information can subsequently be read with ease because the difference between the reflectances of the discolored and non-discolored areas is large.

According to an invention described in claim 2, the optical recording medium according to claim 1, wherein the ultrafine silver particles have an average diameter ranging from 1 to 20 nm and are manufactured by thermally decomposing an organic complex or a metal salt containing silver. The ultrafine silver particles may be manufactured by heating silver stearate at about 250°C for 4 h in a nitrogen atmosphere or heating silver nitrate at about 240°C for 3 h in a nonaqueous solvent in the presence of an ionic organic substance, for example.

According to an invention described in claim 3, there is provided an apparatus for manufacturing an optical recording medium, comprising a material liquid supply device for dropping an ultrafine silver particle solution containing ultrafine silver particles onto an upper surface of a substrate held by a rotatable substrate holder, and a heat-treating device for heating the substrate to melt and bond the silver particles together.

According to an invention described in claim 4, the apparatus for manufacturing an optical recording medium according to claim 3 is further comprising a supplementary drying device for supplementarily drying a solvent in the ultrafine silver particle solution supplied to the upper surface of the substrate. With this arrangement, it is possible to fully vaporize an organic solvent that cannot be dried up in a spin drying process (air drying process) with a spin coater or the like, for example, thus preventing defects from being formed in a thin film in the subsequent heat-treating process.

According to an invention described in claim 5, the apparatus for manufacturing an optical recording medium according to claim 3 or 4, wherein the heat-treating device is arranged to heat the substrate under the control of an atmosphere. The ultrafine silver particles are heated (baked) while a nitrogen gas containing a small amount of oxygen or ozone is flowing, and thereafter a nitrogen gas containing hydrogen is supplied to reduce the silver to form a thin film of silver, after which the gas is changed to a nitrogen gas. In this manner, the thin film of silver can efficiently be formed.

According to an invention described in claim 6, the apparatus for manufacturing an optical recording medium according to any one of claims 3 through 5, wherein the heat-treating device has a heating plate which houses a heater for heating the substrate at a temperature of 450°C or lower and a cooling mechanism. This arrangement is capable of reducing thermal effects on the substrate.

According to an invention described in claim 7, there is provided an apparatus for manufacturing an optical recording medium, comprising a material liquid contacting section for continuously bringing an elongate film-like base which is continuously supplied into contact with an ultrafine silver particle solution or an ultrafine silver particle paste containing ultrafine silver particles, a drying section for evaporating a solvent in the ultrafine silver particle solution or the ultrafine silver particle paste which is held by the base, and a baking furnace for heating the base to melt and bond the silver particles together. The apparatus makes it possible to continuously form an information recording layer comprising an ultrafine silver particle thin film on one surface of an elongate film-like base.

According to an invention described in claim 8, the apparatus for manufacturing an optical recording medium according to claim 7, wherein the material liquid contacting section is arranged to continuously dip the base in the ultrafine silver particle solution containing ultrafine silver particles.

According to an invention described in claim 9, the apparatus for manufacturing an optical recording medium according to claim 7, wherein the material liquid contacting section is arranged to continuously spray the ultrafine silver particle solution containing ultrafine silver particles on one surface of the base.

According to an invention described in claim 10, the apparatus for manufacturing an optical recording medium according to claim 7, wherein the material liquid contacting section is arranged to continuously coat one surface of the base with the ultrafine silver particle solution or the ultrafine silver particle paste containing ultrafine silver particles.

### Brief Description of Drawings

FIG. 1 is a process flow diagram showing a sequence of manufacturing ultrafine silver particles that are used in the present invention;
FIG. 2 is a process flow diagram showing a sequence of manufacturing an optical recording medium according to an embodiment of the present invention;
FIG. 3 is a perspective view, partly broken away, of a material liquid supply device of an apparatus for manufacturing the optical recording medium according to the embodiment of the present invention;
FIG. 4 is a vertical sectional front elevational view of the material liquid supply device of the apparatus for manufacturing the optical recording medium;
FIG. 5 is a cross-sectional view of a supplementary drying device of the apparatus for manufacturing the optical recording medium;
FIG. 6 is a schematic view of a heat treating device of the apparatus for manufacturing the optical recording medium;
FIG. 7 is a vertical sectional front elevational view of the heat treating device of the apparatus for manufacturing the optical recording medium;
FIG. 8A is a schematic view of an apparatus for manufacturing an optical recording medium according to another embodiment of the present invention;
FIG. 8B is an enlarged view of a roller shown in FIG. 8A;
FIG. 8C is an enlarged view of a scraper shown in FIG. 8A;
FIG. 9A is a view showing a modification of a material liquid contacting section shown in FIG. 8;
FIG. 9B is a view showing another modification of the material liquid contacting section;
FIG. 10 is a schematic view of an information recording (writing) device; and
FIG. 11 is a schematic view of an information reproducing (reading) device.

### Best Mode for Carrying Out the Invention

Embodiments of the present invention will be described below with reference to the drawings.

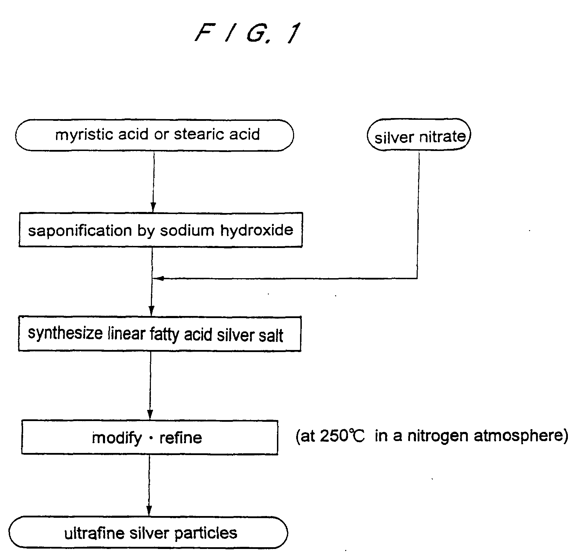

FIG. 1 shows a sequence of manufacturing ultrafine silver particles which have an average diameter, for example, ranging from 1 to 20 nm, preferably from 1 to 10 nm. Myristic acid or stearic acid, for example, is saponified by sodium hydroxide, and thereafter reacted with silver nitrate to produce linear fatty acid silver salt (the carbon number of an alkyl group = 14, 18, 18ω). The linear fatty acid silver salt is modified by being heated for 4 h in a nitrogen atmosphere at about 250°C, and refined to produce ultrafine silver particles covered with alkyl chain shells.

Although not shown, silver nitrate (metal salt) may be heated in a naphthene-based high boiling solvent (nonaqueous solvent) in the presence of oleic acid (ionic organic substance) for 3 h at about 240°C below the decomposing reducing temperature of silver nitrate and the decomposing temperature of the ionic organic substance to produce ultrafine silver particles covered with the ionic organic substance.

Since the ultrafine silver particles thus produced are covered with the alkyl chain shells or the ionic organic substance, when they are dissolved in an organic solvent such as cyclohexane or the like, they do not aggregate together, but are stably mixed uniformly in the solvent, resulting in a transparent state, i.e., a solubilized state.

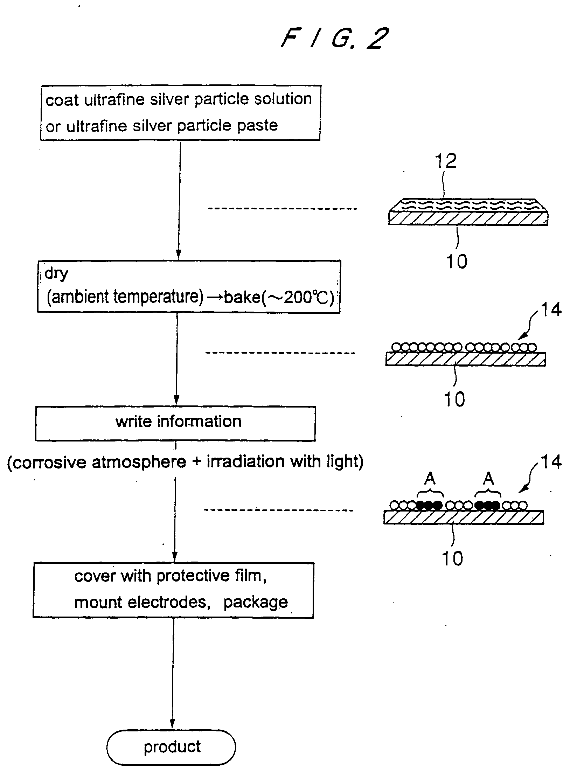

FIG. 2 shows a sequence of manufacturing an optical recording medium using the ultrafine silver particles thus produced. First, a substrate 10 of quartz or the like, for example, which is flat and has small thermal conductivity, is prepared. Then, the face side of the substrate 10 is coated with an ultrafine silver particle solution 12 which has been prepared by dispersing ultrafine silver particles in a solvent such as cyclohexane or the like.

Then, the ultrafine silver particle solution 12 is dried by evaporating the solvent. Thereafter, the ultrafine silver particles are baked by being held, for 0.5 h, for example, at a temperature of about 200°C, for example, which is equal to or higher than the decomposing temperature of the alkyl chain shells or ionic organic substance that covers the ultrafine silver particles, thus forming an ultrafine silver particle thin film 14 made up of ultrafine silver particles only on the upper surface of the substrate 10. The ultrafine silver particle thin film 14 serves as an information recording layer. Specifically, the alkyl chain shells or ionic organic substance that covers the ultrafine silver particles is decomposed away, and, at the same time, the ultrafine silver particles are melted together to produce an information recording layer serving as the ultrafine silver particle thin film 14 which is of a uniform film thickness.

It is known that the melting point of a metal particle is lowered as the diameter thereof is reduced. This effect starts to manifest itself when the diameter of the metal particle is 20 nm or less, and becomes distinctive when the diameter of the metal particle is 10 nm or less. Therefore, the average diameter of the ultrafine silver particles are preferably in the range from 1 to 20 nm, and more preferably in the range from 1 to 10 nm. For example, if ultrafine silver particles in a cluster level having an average diameter of about 5 nm are used, then the ultrafine silver particles can be melted together when heated to about 200°C.

Then, in a corrosive atmosphere with H₂S, SO₂ gas, or the like, given areas on the ultrafine silver particle thin film (information recording layer) 14 is irradiated with a laser beam or the like, turning the color of the irradiated areas into brown or black. Information is written by forming the discolored areas A.

Generally, silver provides a very active surface and is easily discolored by reacting with a corrosive medium (H₂S, SO₂ gas, or the like). Since the discoloration is greatly accelerated upon irradiation with light in a corrosive environment, conditions of the corrosive environment and the irradiation with light may properly be selected to form minute discolored areas A in necessary regions to write information without causing high local temperature rises. The information can subsequently be read with ease because the difference of the reflectances between the discolored and non-discolored areas is large.

After information has been written by forming discolored areas A, as described above, the upper surface of the ultrafine silver particle thin film (information recording layer) 14 is covered with a protective film, and then electrodes are mounted and the assembly is packed, for example, thus forming a complete product.

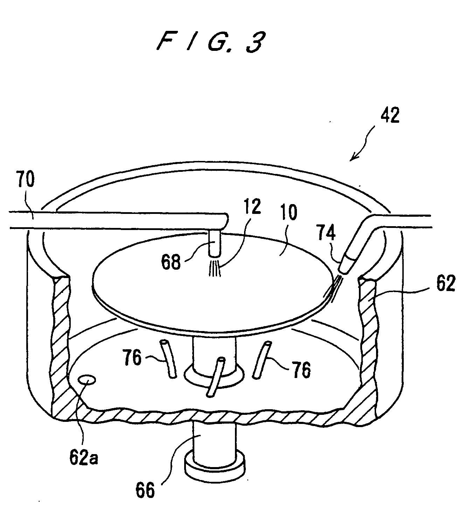

FIGS. 3 through 7 show a material liquid supply device 42, a supplementary drying device 46, a heat-treating device 50, respectively, which jointly make up an apparatus for manufacturing an optical recording medium according to an embodiment of the present invention. The supplementary drying device 46 is incorporated if necessary.

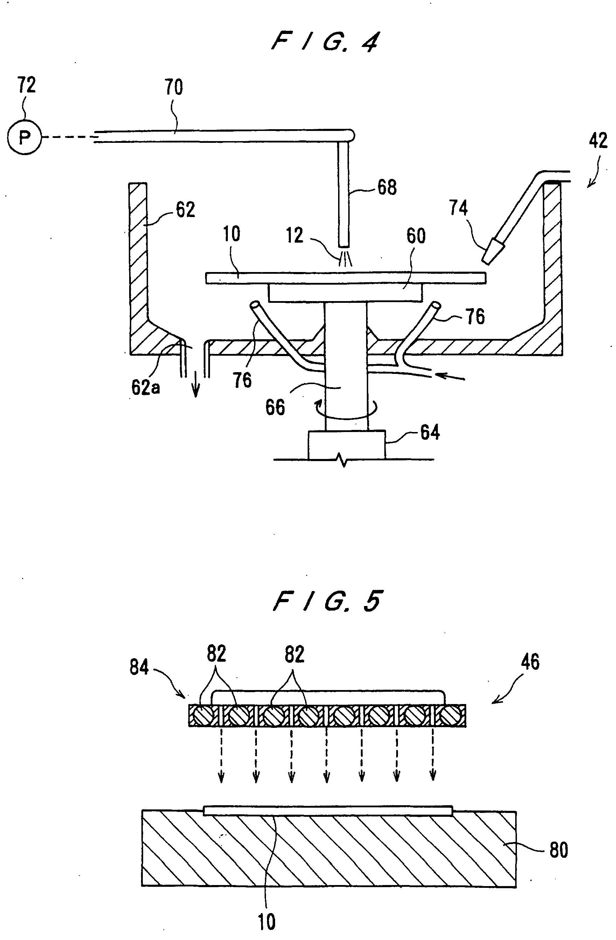

The material liquid supply device 42 supplies an ultrafine silver particle solution 12 (see FIG. 2) to the upper surface (face side) of the substrate 10. As shown in FIGS. 3 and 4, the material liquid supply device 42 comprises a substrate holder 60 for holding and rotating the substrate 10 horizontally, and a bottomed cup-shaped scattering prevention bowl 62 surrounding the substrate 10 that is held by the substrate holder 60. The substrate holder 60 has a vacuum chuck on its upper surface for attracting and holding the substrate 10, and is connected to the upper end of a spindle 66 that extends from a servomotor 64 for rotation upon energization of the servomotor 64. The scattering prevention bowl 62 is made of a material resistant to organic solvents, e.g., stainless steel.

A downwardly directed material liquid supply nozzle 68 for dropping the ultrafine silver particle solution 12 is positioned above either the center of the surface of the substrate 10 that is held by the substrate holder 60 or a spot slightly off the center of the surface of the substrate 10. The material liquid supply nozzle 68 is connected to the free end of an arm 70. The arm 70 accommodates therein a pipe for supplying a metered amount of ultrafine silver particle solution. The pipe extends from a metered amount supply device 72 such as a syringe pump or the like and is communicated to the material liquid supply nozzle 68.

A bevel washing nozzle 74 which is inclined downwardly inwardly is positioned above the circumferential area of the substrate 10 held by the substrate holder 60, for supplying a washing liquid to the bevel of the substrate 10. A plurality of reverse side washing nozzles 76 which are inclined upwardly outwardly are positioned below the substrate 10 held by the substrate holder 60, for supplying a gas or washing liquid to the reverse side of the substrate 10. The scattering prevention bowl 62 has a drain hole 62a defined in its bottom.

Therefore, the substrate 10 is held by the substrate holder 60, and the servomotor 64 is energized to rotate the substrate 10 at a speed ranging from 300 to 500 rpm, for example, more preferably from 400 to 500 rpm. While the substrate 10 is being thus rotated, the material liquid supply nozzle 68 drops a metered amount of ultrafine silver particle solution 12 onto the central area of the surface of the substrate 10. When the surface of the substrate 10 is covered with the ultrafine silver particle solution 12, the dropping of the ultrafine silver particle solution 12 is stopped to uniformly coat the surface of the substrate 10 with the ultrafine silver particle solution 12. At the same time, the bevel washing nozzle 74 supplies a hydrophilic organic solvent such as methanol, acetone, or the like, or a washing liquid such as ethanol, isopropyl alcohol, or the like, to the bevel of the substrate 10 to prevent the ultrafine silver particle solution 12 from dropping from the edge of the substrate 10 or flowing across the edge of the substrate 10 to the reverse side of the substrate 10. The reverse side washing nozzles 76 also supplies a gas such as an N₂ gas, air, or the like, or a washing liquid which is the same as the washing liquid supplied to the bevel of the substrate 10, to the reverse side of the substrate 10 to prevent a contamination of the reverse side of the substrate 10 by using the gas flow or the washing liquid.

With the dropping of the ultrafine silver particle solution 12 being stopped, the servomotor 64 rotates the substrate 10 to dry the substrate 10 in a spin drying process (air drying process) to evaporate the solvent in the ultrafine silver particle solution 12 coated on the substrate 10.

The process of applying the ultrafine silver particle solution 12 to the face side of the substrate 10 and spin-drying the substrate 10 is repeated a plurality of times as required. This process is put to an end when the ultrafine silver particle solution 12 left on the substrate 10 after being dried reaches a certain thickness.

Finally, the substrate may be rotated at a higher speed to quicken the drying of the solvent. An excessive amount of ultrafine silver particle solution 12 and the washing liquid that has been used to wash the bevel and reverse side of the substrate are discharged out of the drain hole 62a.

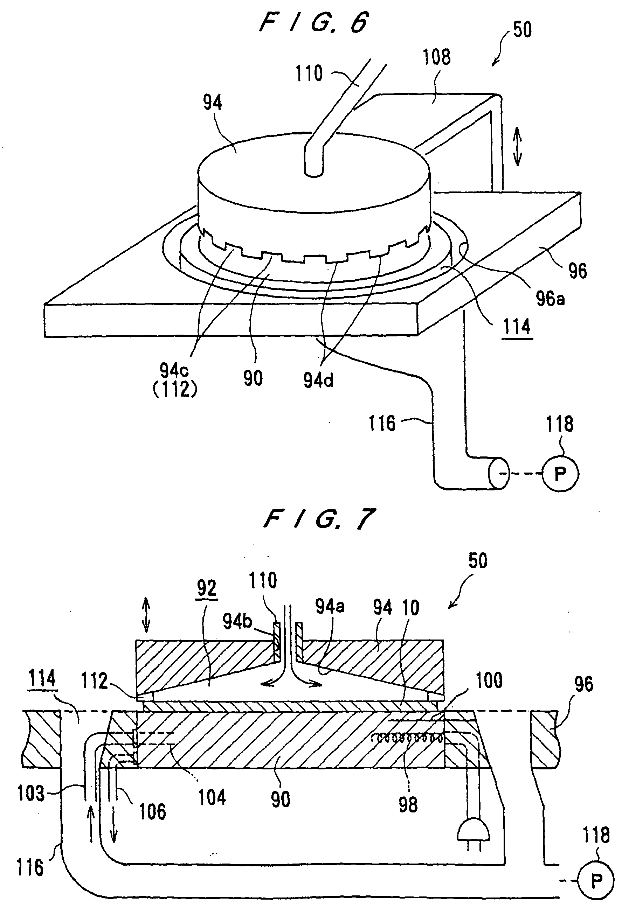

As shown in FIG. 5, the supplementary drying device 46 has a substrate holding base 80 for holding the substrate 10 with its face side oriented upwardly and a heating device 84 disposed above the substrate holding base 80, the heating device 84 comprising lamp heaters 82, for example.

The supplementary drying device 46 serves to dry up the solvent that has not been evaporated by the spin drying process carried out by the material liquid supply device 42. The supplementary drying device 46 may not necessarily be required if the solvent is sufficiently dried up by the spin-drying process carried out by the material liquid supply device 42 such as when the solvent is coated as a very thin film, for example.

Specifically, if the ultrafine silver particle solution 12 deposited on the face side of the substrate 10 is heated while the organic solvent remains in the ultrafine silver particle solution 12, defects may possibly be formed in the thin film. Such defects are prevented from occurring by completely drying up the solvent with the supplementary drying device 46. The temperature to be achieved by the supplementary drying device 46 is preferably lower than the decomposition temperature of the ultrafine silver particles, e.g., about 100°C, for thereby preventing decomposition of the ultrafine silver particles, and for completely drying up the solvent.

The heat-treating device 50 serves to heat the ultrafine silver particle solution 12 to melt and bond the silver particles together. As shown in FIGS. 6 and 7, the heat-treating device 50 has a heating plate 90 for holding and heating the substrate 10 with its face side directed upwardly, a housing 94 which surrounds a space above the substrate 10 that is held by the heating plate 90 to define a gas chamber 92 between the housing 94 and the heating plate 90, and a frame 96 which surrounds the heating plate 90.

The heating plate 90 is made of aluminum or copper, for example, which has a high heat conductivity and can uniformly be heated at a high speed, and is in the form of a disk. The heating plate 90 houses therein a heater 98 and a temperature sensor 100 for detecting the temperature of the heating plate 90. The heating plate 90 also has a coolant flow passage 104 communicating with a coolant inlet passage 103 for introducing a coolant such as a cooling gas, air, or the like. The coolant flow passage 104 communicates with a coolant outlet passage 106.

The housing 94 is made of ceramics, for example, and is fixed to the free end of a vertically movable arm 108. The housing 94 has a conical recess 94a defined in the reverse side thereof which provides the gas chamber 92 between itself and the substrate 10 placed on and held by the heating plate 90 when the housing 94 is placed downwardly. Furthermore, the housing 94 has a gas supply port 94b defined centrally therein which is connected to a gas supply pipe 110. The housing 94 also has an alternately arranged succession of slits 94c and pressers 94d on its lower peripheral edge. When the housing 94 is placed downwardly, the pressers 94d are brought into abutment against the peripheral edge of the substrate 10 that is placed on and held by the heating plate 90, gripping and holing the peripheral edge of the substrate 10 between the heating plate 90 and the pressers 94d, and the slits 94c provide gas discharge ports 112.

The frame 96 has a through hole 96a defined therein which provides a gas inlet port 114 with an inner surface thereof. A discharge duct 116 communicating with the gas inlet port 114 is fixed to the reverse side of the frame 96, and is connected to a discharge blower 118.

Therefore, the substrate 10 is placed on and held by the upper surface of the heating plate 90. The substrate 10 is heated to 300°C in 5 min, for example, held at 300°C for 5 min, and thereafter cooled to the room temperature in 10 min, thus promptly melting and bonding the ultrafine silver particles together. At this time, an inactive gas of N₂ or the like containing a small amount of oxygen or ozone is introduced from the gas supply pipe 110 into the gas chamber 92, and thereafter an inactive gas of pure N₂ or the like is introduced from the gas supply pipe 110 into the gas chamber 92. The oxygen or ozone acts as a catalyst to separate the organic substance and the metal from each other, thus promoting the decomposition of the ultrafine silver particles. An oil mist produced when the ultrafine silver particles are decomposed is removed from the substrate surface by the N₂ gas, for example. Therefore, the oil mist is prevented from fuming and becoming stagnant on the substrate surface to contaminate the substrate.

The oxygen or ozone may be added in a small quantity as it would never undesirably oxidize the ultrafine particles.

It is preferable that the ultrafine silver particles be heated (baked) while a nitrogen gas containing a small amount of oxygen or ozone is flowing, and thereafter a nitrogen gas containing hydrogen be supplied to prevent the silver from being oxidized and to reduce the silver to form interconnections of pure silver, after which the gas be changed to a nitrogen gas. In this manner, the ultrafine silver particle thin film (information recording layer) 14 (see FIG. 2) can efficiently be formed on the face side (upper surface) of the substrate 10.

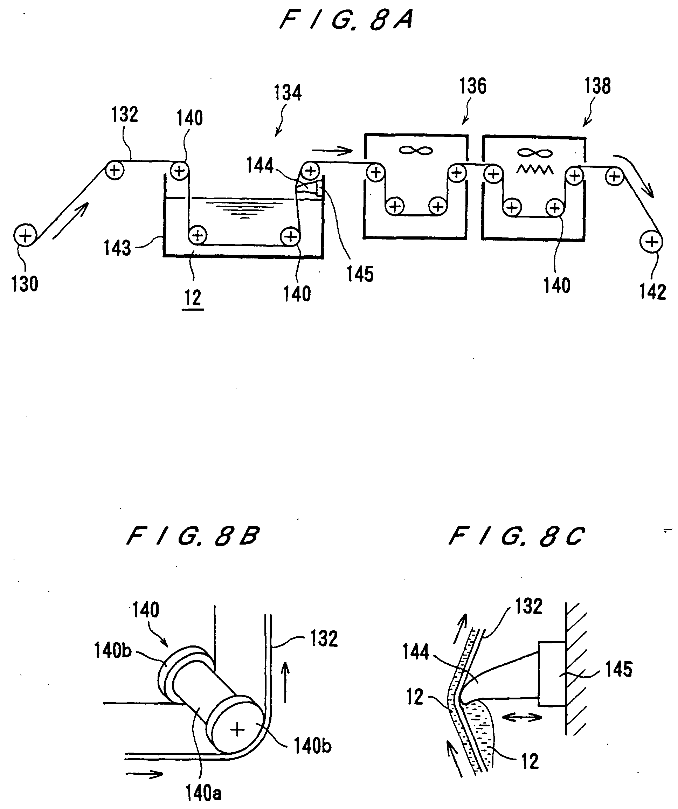

FIG. 8A shows an apparatus for manufacturing an optical recording medium according to a second embodiment of the present invention by continuously forming the ultrafine silver particle thin film (information recording layer) 14 (see FIG. 2) on one surface of an elongate film-like base 132 wound around a feeder 130.

The manufacturing apparatus comprises a material liquid contacting section 134 for bringing the base 132 into contact with the ultrafine silver particle solution 12, a drying section 136 for evaporating the solvent of the ultrafine silver particle solution 12 applied to the base 132, a baking furnace 138 for heating the base 132 to melt and bond the ultrafine silver particles together, and a plurality of rollers 140 arrayed along the path of the base 132. As shown in FIG. 8B, each of the rollers 140 has a cylindrical support 140a and rolls 140b joined to respective opposite ends of the cylindrical support 140a, the rolls 140b having an outside diameter greater than that of the cylindrical support 140a. The base 132 to which the ultrafine silver particle solution 12 is applied has peripheral edges held in contact with the rolls 140b and a central area kept out of contact with the cylindrical support 140a. The base 132 as it is fed from the feeder 130 is guided by the rollers 140, passes successively through the material liquid contacting section 134, the drying section 136, and the baking furnace 138, and then is wound by a take-up device 142.

In the present embodiment, the material liquid contacting section 134 comprises a dipping tank 143 holding the ultrafine silver particle solution 12 therein, and a scraper 144 mounted on an inner surface of the dipping tank 143 near an exit end thereof for the base 132. As shown in FIG. 8C, the scraper 144 projects into the dipping tank 143 by a distance which can be changed by a pressure adjusting mechanism 145. When the base 132 is dipped in the ultrafine silver particle solution 12 held in the dipping tank 143, the both surfaces of the base 132 are brought into contact with the ultrafine silver particle solution 12. The ultrafine silver particle solution 12 applied to one surface (reverse side) of the base 132 is scraped off by the scraper 144.

With the manufacturing apparatus, it is possible to continuously form an information recording layer serving as an ultrafine silver particle thin film on one surface (face side) of the elongate film-like base 132, and sequentially wind the elongate film-like base 132 having the information recording layer thereon with the take-up device 142.

In order to apply the ultrafine silver particle solution to one surface of the base, the scraper 144 shown in FIG. 8C may be mounted on the dipping tank 143, if necessary, and pressed against the base 132 with a suitable pressing force for scraping off the solution that has been applied to the undesired surface of the base.

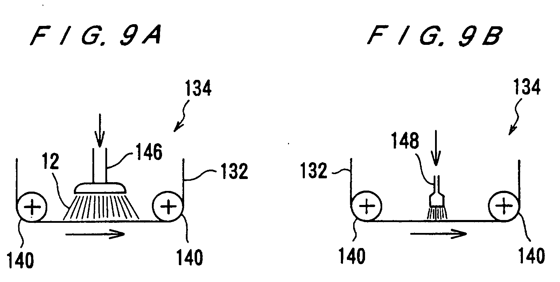

FIGS. 9A and 9B show other examples of the material liquid contacting section 134. In FIG. 9A, the material liquid contacting section 134 has a material liquid spray nozzle 146 for spraying the ultrafine silver particle solution 12 toward one surface of the base 132 to coat the ultrafine silver particle solution 12 on the base 132. In FIG. 9B, the material liquid contacting section 134 has a material liquid coating brush 148 for coating an ultrafine silver particle solution or an ultrafine silver particle paste containing ultrafine silver particles, which has entered the brush 148, on one surface of the base 132 from the tip end of the brush 148.

For bringing the elongate base into contact with the ultrafine silver particle solution using the rollers, as described above, it is the basic practice to use the stepped roller as shown in FIG. 8B and hold the applied solution kept on the base except peripheral areas thereof.

The ultrafine silver particle solution may be brought into contact with (coated on) one surface of the base with a doctor blade, through a screen printing process, or the like.

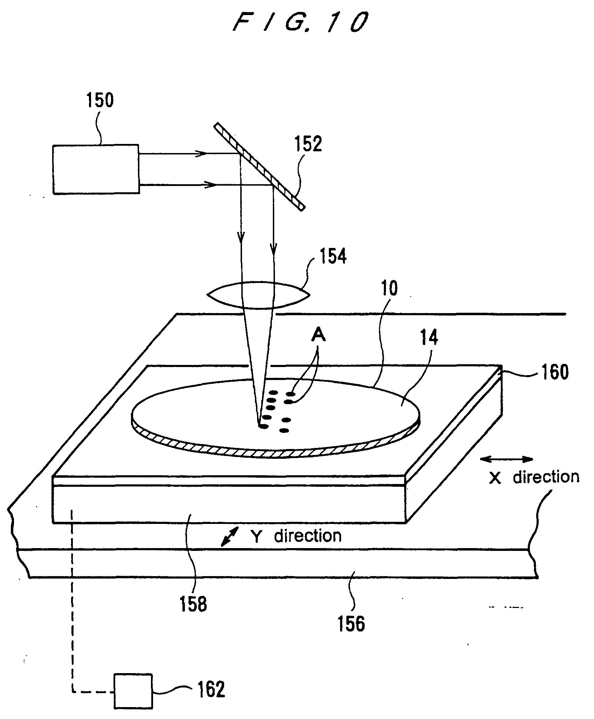

FIG. 10 shows an information recording (writing) device for writing information on the ultrafine silver particle thin film (information recording layer) 14 of the optical recording medium which is constructed as described above. The information recording (writing) device comprises a laser beam source 150, a reflecting mirror 152 for reflecting a laser beam emitted from the laser beam source 150 at a right angle, a condensing lens system 154 for converging the laser beam reflected by the reflecting mirror 152, an X-Y stage 160 mounted on a reference plate 156 and movable in X and Y directions by a drive mechanism 158, and a drive controller 162 for controlling movement of the X-Y stage 160.

The substrate 10 with the ultrafine silver particle thin film (information recording layer) 14 formed on its upper surface is placed on the X-Y stage 160. While movement of the X-Y stage 160 is being controlled by the drive controller 162, desired areas on the substrate 10 in a corrosive atmosphere including H₂S, SO₂ gas, or the like, for example, are irradiated with the laser beam emitted from the laser beam source 150. The ultrafine silver particle thin film (information recording layer) 14 in the areas irradiated with the laser beam changes its color to brown or black. Information is written in terms of forming the discolored areas A arraying pattern.

Conditions of the corrosive atmosphere and the irradiation with the laser beam may properly be adjusted to form minute discolored areas A in necessary regions to write information without causing high local temperature rises.

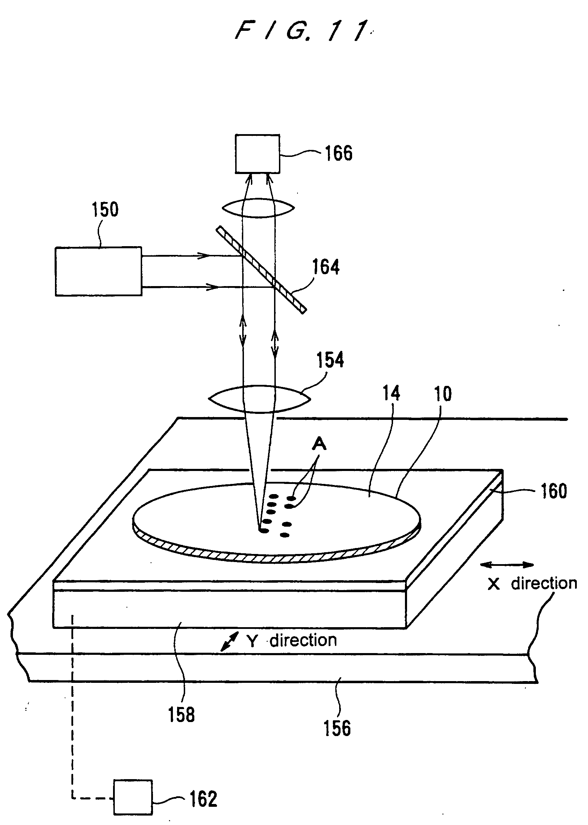

FIG. 11 shows an information reproducing (reading) device for reading information thus written. The information reproducing (reading) device is similar to the information recording (writing) device shown in FIG. 10 except that the reflecting mirror 152 is replaced with a semitransparent mirror 164 and a photodetector 166 is positioned behind the semitransparent mirror 164 where the reflected laser beam passes through the semitransparent mirror 164. Other structural details of the information reproducing (reading) device are the same as those of the information recording (writing) device shown in FIG. 10.

The substrate 10 with information written therein is placed on the X-Y stage 160. While movement of the X-Y stage 160 is being controlled by the drive controller 162, the laser beam emitted from the laser beam source 150 collides with the substrate, while scanning the substrate 10. The laser beam reflected by the ultrafine silver particle thin film (information recording layer) 14 of the discolored areas A, which have been turned brown or black, is detected by the photodetector 166. Depending on the difference between the reflectance of the discolored areas A and the reflectance of the non-discolored areas, the detector is capable of discriminating the reflected light and reading the written information. In other words, the written information is read based on the distribution of the discolored areas A.

According to the present invention, as described above, an optical recording medium is produced based on the discoloration of ultrafine silver particles upon irradiation with light in place of the thermal oxidization of palladium in conventional technology. Desired areas of the information recording layer of the optical recording medium are discolored to write information without causing high local temperature rises. The information can subsequently be read with ease because the difference between the reflectances of the discolored and non-discolored areas is large. The present invention avoids various conventional drawbacks such as the absorption of hydrogen and the generation of active hydrogen.

### Industrial Applicability

The present invention relates to an optical recording medium for writing information and reading written information based on a change that is caused in the optical property of an information recording layer by the application of a laser beam, etc., and an apparatus for manufacturing such an optical recording medium. By producing an optical recording medium based on the discoloration of ultrafine silver particles upon irradiation with light, desired areas of the information recording layer can be discolored to write information without causing high local temperature rises. The information can subsequently be read with ease because the difference between the reflectances of the discolored and non-discolored areas is large.

## Claims

1. An optical recording medium **characterized in that** an information recording layer comprising an ultrafine silver particle thin film is formed by bringing an upper surface of a substrate into contact with an ultrafine silver particle solution or an ultrafine silver particle paste containing ultrafine silver particles, and thereafter drying and baking the ultrafine silver particle solution or the ultrafine silver particle paste.

2. An optical recording medium according to claim 1, wherein said ultrafine silver particles have an average diameter ranging from 1 to 20 nm and are manufactured by thermally decomposing an organic complex or a metal salt containing silver.

3. An apparatus for manufacturing an optical recording medium, comprising:
a material liquid supply device for dropping an ultrafine silver particle solution containing ultrafine silver particles onto an upper surface of a substrate held by a rotatable substrate holder; and
a heat-treating device for heating said substrate to melt and bond the silver particles together.

4. An apparatus for manufacturing an optical recording medium according to claim 3, further comprising a supplementary drying device for supplementarily drying a solvent in the ultrafine silver particle solution supplied to the upper surface of said substrate.

5. An apparatus for manufacturing an optical recording medium according to claim 3 or 4, wherein said heat-treating device is arranged to heat said substrate under the control of an atmosphere.

6. An apparatus for manufacturing an optical recording medium according to any one of claims 3 through 5, wherein said heat-treating device has a heating plate which houses a heater for heating the substrate at a temperature of 450°C or lower and a cooling mechanism.

7. An apparatus for manufacturing an optical recording medium, comprising:
a material liquid contacting section for continuously bringing an elongate film-like base which is continuously supplied into contact with an ultrafine silver particle solution or an ultrafine silver particle paste containing ultrafine silver particles;
a drying section for evaporating a solvent in the ultrafine silver particle solution or the ultrafine silver particle paste which is held by said base; and
a baking furnace for heating said base to melt and bond the silver particles together.

8. An apparatus for manufacturing an optical recording medium according to claim 7, wherein said material liquid contacting section is arranged to continuously dip said base in the ultrafine silver particle solution containing ultrafine silver particles.

9. An apparatus for manufacturing an optical recording medium according to claim 7, wherein said material liquid contacting section is arranged to continuously spray the ultrafine silver particle solution containing ultrafine silver particles on one surface of said base.

10. An apparatus for manufacturing an optical recording medium according to claim 7, wherein said material liquid contacting section is arranged to continuously coat one surface of said base with the ultrafine silver particle solution or the ultrafine silver particle paste containing ultrafine silver particles.
